# EUROPÄISCHE PATENTSCHRIFT

(11) **EP 2 043 045 B1**
(45) Veröffentlichungstag und Bekanntmachung des Hinweises auf die Patenterteilung: **07.09.2011**
(21) Anmeldenummer: 07018503.8
(22) Anmeldetag: 20.09.2007
(51) Int. Cl.: G06T 7/20, G06K 9/00

(54) **Verfahren zur Objektverfolgung**
Method for tracking an object
Procédé destiné au suivi d'objet

(43) Veröffentlichungstag der Anmeldung: 01.04.2009
(73) Patentinhaber: Delphi Technologies, Inc., Troy, Michigan 48007 (US)
(72) Erfinder: Meuter, Mirko, 42781 Haan-Gruiten (DE); lurgel, Uri, Dr., 42369 Wuppertal (DE)
(74) Vertreter: Denton, Michael John

(56) Entgegenhaltungen:
- PONSA D ET AL: "Multiple vehicle 3D tracking using an unscented Kalman filter" INTELLIGENT TRANSPORTATION SYSTEMS, 2005. PROCEEDINGS. 2005 IEEE VIENNA, AUSTRIA 13-16 SEPT. 2005, PISCATAWAY, NJ, USA,IEEE, 13. September 2005 (2005-09-13), Seiten 1108-1113, XP010843181 ISBN: 0-7803-9215-9
- BERTOZZI M ET AL: "Shape-based pedestrian detection and localization" INTELLIGENT TRANSPORTATION SYSTEMS, 2003. PROCEEDINGS. 2003 IEEE OCT. 12-15, 2003, PISCATAWAY, NJ, USA,IEEE, Bd. 1, 12. Oktober 2003 (2003-10-12), Seiten 328-333, XP010673843 ISBN: 0-7803-8125-4
- BINELLI E ET AL: "A modular tracking system for far infrared pedestrian recognition" INTELLIGENT VEHICLES SYMPOSIUM, 2005. PROCEEDINGS. IEEE LAS VEGAS, NV, USA JUNE 6-8, 2005, PISCATAWAY, NJ, USA,IEEE, 6. Juni 2005 (2005-06-06), Seiten 759-764, XP010833888 ISBN: 0-7803-8961-1
- VAN DER MERWE R ET AL: "The square-root unscented Kalman filter for state and parameter-estimation" 2001 IEEE INTERNATIONAL CONFERENCE ON ACOUSTICS, SPEECH, AND SIGNAL PROCESSING. PROCEEDINGS. (ICASSP). SALT LAKE CITY, UT, MAY 7 - 11, 2001, IEEE INTERNATIONAL CONFERENCE ON ACOUSTICS, SPEECH, AND SIGNAL PROCESSING (ICASSP), NEW YORK, NY : IEEE, US, Bd. VOL. 1 OF 6, 7. Mai 2001 (2001-05-07), Seiten 3461-3464, XP010803214 ISBN: 0-7803-7041-4
- DANIEL PONSA ET AL: "A Proposal of a Monocular Multiple Vehicle 3D Tracking System", 1ST CVC INTERNAL WORKSHOP, COMPUTER VISION: PROGRESS OF RESEARCH AND DEVELOPMENT, 6 October 2006 (2006-10-06), pages 111-116, CVC (UAB), Bellaterra (Spain)

## Beschreibung

Die vorliegende Erfindung betrifft ein so genanntes Tracking-Verfahren, das heißt ein Verfahren zum Erkennen und Verfolgen eines beweglichen Objekts. Genauer betrifft sie ein Verfahren zum Erkennen und Verfolgen eines Fußgängers von einem Kraftfahrzeug aus. Dabei ist an dem Kraftfahrzeug eine Kameraeinrichtung angeordnet, mittels derer in regelmäßigen Zeitabständen ein Bildpunkte umfassendes Bild der Umgebung im Sichtbereich der Kameraeinrichtung aufgenommen wird.

Derartige Verfahren zur Objektverfolgung, so genannte Tracking-Verfahren, sind grundsätzlich bekannt. Es sind auch bereits Anwendungen im Kraftfahrzeugbereich bekannt, bei denen Tracking-Verfahren eingesetzt werden, um die Bewegung eines Fußgängers oder auch eines Radfahrers oder eines anderen Fahrzeugs zu verfolgen und vorherzusagen, so dass ein drohender Zusammenstoß frühzeitig vorhergesehen werden kann. Über ein Fahrerassistenzsystem kann bei einem drohenden Zusammenstoß, insbesondere mit einem Fußgänger, das Fahrzeug abgebremst werden, oder es können geeignete Sicherheitseinrichtungen aktiviert werden. Alternativ oder zusätzlich kann auch ein Alarmsignal ausgegeben werden, um den Fahrer zu warnen.

Eine Schwierigkeit bei derartigen Anwendungen ist dabei, dass sich nicht nur dass zu verfolgende Objekt, beispielsweise ein Fußgänger, sondern auch die fahrzeugfeste Kamera bewegt. Diese beiden Bewegungen überlagern sich, und die resultierende Bewegung zwischen zwei von der Kameraeinrichtung nacheinander aufgenommenen Bildern ist schwer zu modellieren. Bisher ist es nicht gelungen, ein zufrieden stellendes Verfahren zur Objektverfolgung mit Hilfe einer bewegten Kamera zur Verfügung zu stellen. Zum einen ist die Qualität der mit herkömmlichen Verfahren erzielbaren Vorhersagen oft nicht befriedigend, zum anderen wird eine vergleichsweise große Rechenleistung benötigt, um die von der Kamera aufgenommenen Bilder in Echtzeit auszuwerten.

In dem Aufsatz von D. Ponsa et al.: "Multiple Vehicle 3D Tracking Using an Unscented Kalman Filter", Proceedings of the 8th International IEEE Conference on Intelligent Transportation Systems, Vienna, Austria, September 13-16, 2005, 1108-1113, ist ein Verfahren zum Verfolgen von mehreren Fahrzeugen anhand der von einer Kamera erfassten Bilder offenbart. Position und Geschwindigkeit der zu verfolgenden Fahrzeuge werden jeweils durch einen Zustandsvektor repräsentiert, dessen zeitliche Entwicklung mittels eines Unscented Kalman-Filters geschätzt wird.

Der vorliegenden Erfindung liegt die Aufgabe zugrunde, ein Verfahren der eingangs genannten Art zur Verfügung zu stellen, welches in der Lage ist, bei möglichst geringem Rechenaufwand zuverlässige Ergebnisse zu liefern.

Diese Aufgabe wird erfindungsgemäß durch ein Verfahren gemäß Anspruch 1 gelöst.

Mit Hilfe eines Bildverarbeitungssystems werden in dem aufgenommenen Bild diejenigen Bildpunkte identifiziert, die zu verfolgenden Fußgängern entsprechen. Für jeden dieser Fußgänger wird dann ein Bildpunkt extrahiert, der eine Projektion in Bildkoordinaten desjenigen Raumpunktes darstellt, an dem der zu verfolgende Fußgänger eine Fahrbahnebene berührt. Selbstverständlich kann auch eine Gruppe von mehreren, nahe beieinander liegenden Bildpunkten extrahiert werden. Diese ausgewählten Bildpunkte entsprechen beispielsweise im dreidimensionalen Raum einem Fuß eines Fußgängers, der über eine Fahrbahn geht. Die Bewegung des entsprechenden Raumpunktes in der Fahrbahnebene wird mittels eines Zustandsschätzers verfolgt, der einen vierdimensionalen Zustandsvektor verwendet, dessen Komponenten eine Position x, y des Raumpunktes in der Fahrbahnebene und eine dazugehörige Geschwindigkeit v_{X}, v_{Y} in der Fahrbahnebene sind.

Bei dem erfindungsgemäßen Verfahren wird also nicht etwa eine dreidimensionale Bewegung verfolgt, sondern es wird lediglich eine Bewegung eines oder mehrerer Raumpunkte in der Fahrbahnebene verfolgt. Dadurch kann der für die Objektverfolgung benötigte Rechenaufwand erheblich verringert werden. Zudem werden Objekte, die sich nicht ausschließlich in der Fahrbahnebene bewegen, automatisch herausgefiltert. Da diejenigen Objekte, deren Verfolgung für eine Anwendung im Kraftfahrzeug sinnvoll ist, d.h. Fußgänger, Radfahrer und beliebige Fahrzeuge, sich immer im Wesentlichen in der Fahrbahnebene bewegen, wird durch diese Filterung in sinnvoller Weise Rechenleistung eingespart. Es wird nämlich ohne zusätzlichen Aufwand bei der Objekterkennung vermieden, dass Rechenleistung auf die Verfolgung von in dem vorliegenden Kontext nicht interessierenden beweglichen Objekten wie beispielsweise Vögeln, vom Wind bewegten Zweigen etc. verwandt wird.

Der Zustandsschätzer, der bei dem erfindungsgemäßen Verfahren verwendet wird, besitzt eine Prädiktor-Korrektur-Struktur. Zunächst wird eine Vorhersage für den Zustandsvektor generiert. Diese Vorhersage wird über geeignete Projektionsgleichungen in Bildkoordinaten umgerechnet, und mittels einer Kovarianzmatrix wird ein zu erwartender Fehler für die Vorhersage in Bildkoordinaten berechnet. Anschließend wird die Vorhersage mit dem in einem zeitlich nachfolgenden Bild extrahierten Bildpunkt verglichen und aktualisiert.

An das erfindungsgemäße Verfahren schließt sich im Allgemeinen ein Verfahrensschritt an, in dem die verfolgten Objekte klassifiziert werden. Dieses Klassifikationsverfahren kann auch bereits vor dem Tracking, das heißt vor der Objektverfolgung, durchgeführt werden. Da die Klassifikation der Objekte mehr Rechenleistung erfordert als die Objektverfolgung, ist es jedoch vorteilhafter, zunächst unbekannte Objekte zu verfolgen, und erst danach die verfolgten Objekte zu klassifizieren. Klassifikationsverfahren, mit denen beispielsweise erkannt werden kann, ob es sich bei dem verfolgten Objekt um einen Fußgänger handelt, sind in der Literatur ausführlich beschrieben und sind nicht Gegenstand der vorliegenden Erfindung, so dass im Folgenden nicht näher auf die Klassifikation eingegangen wird.

Der Zustandsschätzer verwendet erfindungsgemäß eine lineare Systemgleichung, welche die Veränderung des Zustandsvektors modelliert als eine gleichförmige Bewegung der Position x, y des Raumpunktes in der Fahrbahnebene mit der dazugehörigen Geschwindigkeit v_{X}, v_{Y} in der Fahrbahnebene.

Eine gleichförmige Bewegung des zu verfolgenden Raumpunktes ist einfach zu modellieren, so dass die Berechnungen mit vertretbarem Aufwand durchführbar sind. Da sich Fußgänger zumindest innerhalb vergleichsweise kurzer Zeiträume im Allgemeinen näherungsweise mit gleichförmiger Geschwindigkeit bewegen, werden bei ausreichend kleinen Zeitabständen zwischen den aufgenommenen Bildern mit einer solchen Systemgleichung gute Ergebnisse erzielt.

Vorteilhafte Ausführungsformen der Erfindung können den abhängigen Ansprüchen sowie der nachfolgenden Beschreibung entnommen werden.

Vorzugsweise wird als Zustandsschätzer ein rekursiver Zustandsschätzer verwendet, welcher davon ausgeht, dass der Verfolgungsprozess eine Struktur ähnlich einem so genannten verborgenen Markov Modell ("Hidden Markov Model") hat. Es wird davon ausgegangen, dass sich der Zustand entsprechend einer Markov Kette erster Ordnung verhält und nur vom jeweils letzten Zustand abhängig ist und dass der zu jedem Zeitpunkt emittierte Messwert nur vom jeweils aktuellen Zustand abhängig ist.

Erfindungsgemäß wird ein Unscented Kalman-Filter verwendet. Da die Projektion eines Raumpunktes in die Bildebene sich nicht durch eine lineare Gleichung beschreiben lässt, kommen nur Varianten des Kalman Filters infrage, die es erlauben, auch Zustände nichtlinearer Systeme zu schätzen. Der bei der Verwendung eines erweiterten Kalman-Filters entstehende Informationsverlust kann verkleinert werden indem bei der Prädiktion mehrere repräsentative Zustandsvektoren zur Vorhersage herangezogen werden. Dies macht sich das Unscented Kalman-Filter zunutze, und in Versuchen konnten mit einem Unscented Kalman-Filter gute Ergebnisse erzielt werden.

Zusätzlich können auch eine Translation und eine Rotation des Fahrzeugs berücksichtigt werden. Vorteilhafterweise werden die Translation und die Rotation des Fahrzeugs aus den Sensordaten eines Geschwindigkeitssensors und eines Gierratensensors ermittelt, welche im Allgemeinen ohnehin im Fahrzeug zur Verfügung stehen. Dabei leitet sich die Rotation unmittelbar aus der ermittelten Gierrate w ab, wohingegen die Translation unter der Annahme berechnet werden kann, dass sich das Fahrzeug auf dem Rand eines Kreises mit dem Radius r=v/w bewegt, wobei v die Fahrzeuggeschwindigkeit ist. Die Komponente der Fahrzeugtranslation in Fahrtrichtung, tx, und die Komponente der Fahrzeugtranslation quer zur Fahrtrichtung, ty, berechnen sich in Abhängigkeit von der Rotation dann aus tx=r*sin(w*dt) und ty=r*(1-cos(w*dt)). Natürlich ist es grundsätzlich auch möglich, die Rotation und Translation auf eine andere Art zu ermitteln bzw. hierzu andere Sensoren zu verwenden.

Die rechnerische Berücksichtigung der Translation und der Rotation kann erfolgen, indem der Zustandsvektor x, y, v_{X}, v_{Y} in ein Koordinatensystem transformiert wird, welches sich mit dem Kraftfahrzeug und damit mit der Kameraeinrichtung bewegt. Der Ursprung dieses Koordinatensystems liegt dabei in der Fahrbahnebene auf Höhe der Kameraeinrichtung, und eine Achse des Koordinatensystems weist in Fahrtrichtung. Die Systemgleichung setzt sich in diesem Fall dann aus der gleichförmigen Bewegung des zu verfolgenden Raumpunktes und der Koordinatentransformation in ein fahrzeugfestes Koordinatensystem zusammen, wobei letztere eine Drehung und eine Translation des Fahrzeuges berücksichtigt.

Bei dieser Vorgehensweise erhält man genauere Vorhersagen verglichen mit Modellen, bei denen die Eigenbewegung des Fahrzeugs nicht separat berücksichtigt wird.

Gemäß einer bevorzugten Ausführungsform der Erfindung wird für den extrahierten Bildpunkt ein Richtungsstrahl bestimmt, der diejenigen Raumpunkte in dem Sichtbereich umfasst, die bei einer Projektion auf das Bild auf den jeweiligen Bildpunkt projiziert würden. Die Kamera wird also als Lochkamera modelliert. Unter Verwendung von extrinsischen und intrinsischen Parametern der Kameraeinrichtung kann über eine Rückprojektion dann derjenige Raumpunkt auf dem Sichtstrahl bestimmt werden, an dem das Objekt die Fahrbahnebene berührt.

Die umgekehrte Projektion, über welche ein vorhergesagter Zustandsvektor von Raumkoordinaten in Bildkoordinaten umgerechnet werden kann, entspricht einer Projektion der Fahrbahnebene in die Bildebene. Diese Projektion von der Fahrbahnebene in die Bildebene wird dabei vorzugsweise ebenfalls unter Verwendung eines Lochkameramodells modelliert. Die Projektion und die Rückprojektion sind nichtlinear, so dass, wie oben bereits erwähnt, ein für nichtlineare Systeme geeigneter Zustandsschätzer verwendet werden sollte. Für die mathematischen Einzelheiten einer solchen Projektion wird verwiesen auf den Artikel von Pascal Fua Vincent Lepetit "Monocular model-based 3d-tracking of rigid objects: A survey", Foundations and trends in computer graphics and vision, Vol. 1, Nr. 1 (2005), 189.

Eine erste Kovarianzmatrix, welche dem zu erwartenden Fehler des Zustandsvektors x, vₓ, y, v_{y} entspricht, setzt sich vorzugsweise aus zwei Termen zusammen. Dabei hängt ein erster Term von der Systemgleichung des Zustandsschätzers und einer in einem vorangegangenen Schritt berechneten Kovarianzmatrix ab, während es sich bei dem zweiten Term um eine Rauschmatrix Q handelt, die ein additives weißes Beschleunigungsrauschen modelliert.

Eine zweite Kovarianzmatrix, die einem zu erwartenden Fehler in Bildkoordinaten entspricht, kann aus der Kovarianzmatrix des Zustandsvektors berechnet werden. Hierfür wird zunächst die Kovarianzmatrix des Zustandsvektors mit Hilfe einer geeigneten Transformation, vorzugsweise einer Unscented Transformation, in den Bildraum transformiert. Zu diesem variablen Anteil wird eine konstante Rausch-Kovarianzmatrix addiert. Durch diese Vorgehensweise wird der Tatsache Rechnung getragen, dass ein in Weltkoordinaten konstantes Rauschen nicht zu einem konstanten Rauschen in Bildkoordinaten führt, da die Projektion der Fahrbahnebene in die Bildebene nicht linear ist. Der Fehler in Bildkoordinaten wird umso größer, je näher an der Kameraeinrichtung sich das zu verfolgende Objekt befindet.

Weiterer Gegenstand der Erfindung ist ein Computerprogramm mit Programmcode-Mitteln, um das erfindungsgemäße Verfahren durchzuführen, wenn das Programm auf einem Computer oder einer entsprechenden Recheneinheit ausgeführt wird.

Gegenstand der Erfindung ist auch ein Computerprogrammprodukt mit Programmcodemitteln, die auf einem computerlesbaren Datenträger gespeichert sind, um das erfindungsgemäße Verfahren durchzuführen, wenn das Computerprogramm auf einem Computer oder einer entsprechenden Recheneinheit ausgeführt wird.

Unter einem Computer wird hierbei eine beliebige Datenverarbeitungsvorrichtung verstanden, mit der das Verfahren ausgeführt werden kann. Insbesondere können diese digitale Signalprozessoren und/oder Mikroprozessoren aufweisen, mit denen das Verfahren ganz oder in Teilen ausgeführt wird.

Schließlich ist Gegenstand der Erfindung eine Vorrichtung zum Erkennen und Verfolgen eines beweglichen Objekts, insbesondere eines Fußgängers, von einem Kraftfahrzeug aus, mit einer an dem Kraftfahrzeug angeordneten Kameraeinrichtung zur Aufnahme eines Bildes und einer Datenverarbeitungseinrichtung, die zur Durchführung des vorstehend beschriebenen Verfahrens ausgebildet ist.

Weitere vorteilhafte Ausführungsformen der Erfindung sind in den Unteransprüchen, der Beschreibung und den Figuren angegeben.

Die Erfindung wird im Folgenden beispielhaft unter Bezugnahme auf die beigefügten Figuren beschrieben.

Die Figuren zeigen jeweils in schematischer Darstellung:
- Fig. 1: ein Kraftfahrzeug mit einer Kameraeinrichtung und einen Fußgänger,
- Fig. 2: eine Darstellung zur Veranschaulichung einer Projek- tion von Raumpunkten in die Bildebene,
- Fig. 3: eine Darstellung zur Veranschaulichung einer Koordi- natentransformation.

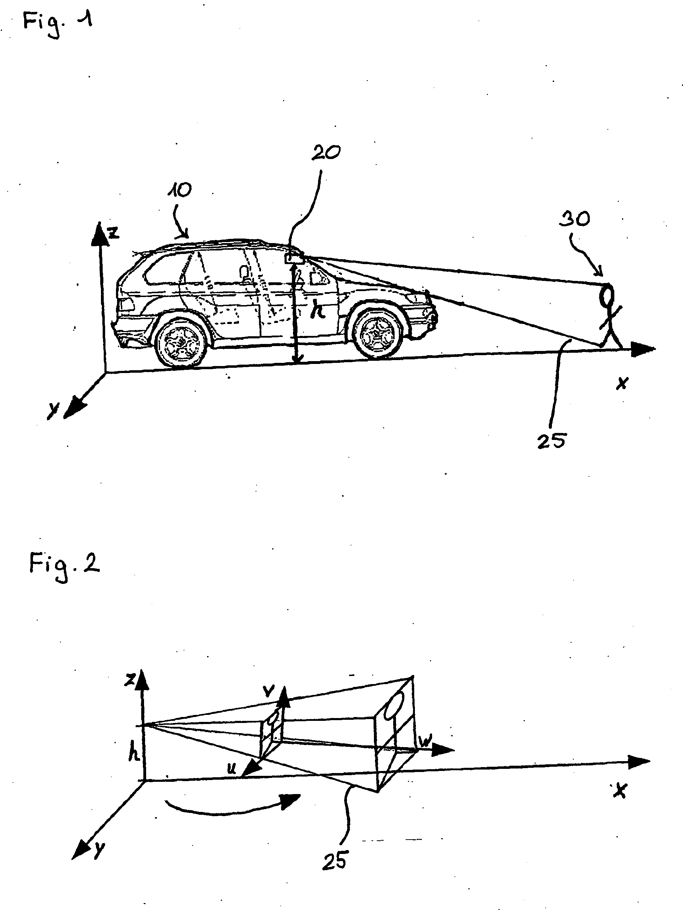

Fig. 1 zeigt ein Kraftfahrzeug 10 mit einer in einem vorderen Bereich des Fahrzeughimmels angebrachten Kameraeinrichtung 20. Die Kameraeinrichtung 20 nimmt ein Bildpunkte umfassendes Bild der Umgebung im Sichtbereich der Kameraeinrichtung auf. Dabei erfasst sie einen Fußgänger 30, wie durch die Richtungsstrahlen 25 angedeutet ist.

Der Raum, in dem sich sowohl das Fahrzeug 10 als auch der Fußgänger 30 bewegen, wird von den drei Koordinatenachsen, x, y, z aufgespannt, wobei die x-y-Ebene (z=0) einer Fahrbahnebene entspricht. Die Kameraeinrichtung 20 liegt dabei um eine Höhe h oberhalb der Fahrbahnebene.

Mit Hilfe eines Bildverarbeitungssystems werden in dem aufgenommenen Bild diejenigen Bildpunkte u, v identifiziert, die einem zu verfolgenden Fußgänger 30 entsprechen. Für diesen Fußgänger 30 wird dann ein Bildpunkt u, v extrahiert, der eine Projektion in Bildkoordinaten desjenigen Raumpunktes darstellt, an dem das zu verfolgende Objekt eine Fahrbahnebene berührt.

Fig. 2 veranschaulicht die Projektion von dem Raum x, y, z in Bildkoordinaten u, v, w (w=0). Die Kameraeinrichtung 20 wird als Lochkamera modelliert. Somit existiert für jeden Bildpunkt u, v ein Richtungsstrahl 25, der diejenigen Raumpunkte x, y, z in dem Sichtbereich umfasst, die bei einer Projektion auf das Bild auf den jeweiligen Bildpunkt u, v projiziert würden. Unter Verwendung von extrinsischen und intrinsischen Parametern der Kameraeinrichtung 20, insbesondere auch der Höhe h der Kameraeinrichtung 20, kann über eine Rückprojektion derjenige Raumpunkt x, y, z auf dem Sichtstrahl 25 bestimmt werden, der tatsächlich dem betreffenden Bildpunkt u, v entspricht.

Die Bewegung des entsprechenden Raumpunktes x, y in der Fahrbahnebene wird mittels eines Zustandsschätzers verfolgt, der einen vierdimensionalen Zustandsvektor verwendet, dessen Komponenten eine Position x, y des Raumpunktes in der Fahrbahnebene und eine dazugehörige Geschwindigkeit v_{X}, v_{Y} in der Fahrbahnebene sind.

Es wird also lediglich eine zweidimensionale Bewegung des Raumpunktes x, y in der Fahrbahnebene verfolgt. Falls sich der Raumpunkt x, y während der Durchführung des Verfolgungsalgorithmus aus der Fahrbahnebene hinaus in z-Richtung bewegt, kann er mit dem erfindungsgemäßen Verfahren nicht weiter verfolgt werden. Da Fußgänger und Fahrzeuge sich im Wesentlichen in der Fahrbahnebene bewegen, werden auf diese Weise bewegte Objekte herausgefiltert, bei denen es sich nicht um Fußgänger oder Fahrzeuge handeln kann.

Mit Hilfe eines Unscented Kalman-Filters wird eine Vorhersage für den Zustandsvektor x, y, v_{X}, v_{Y} generiert.

Zunächst wird das Filter initialisiert. Hierzu wird ein Initialfehler in der Bildebene geschätzt und mit Hilfe der Unscented Transformation auf die Bodenebene transformiert. Das Ergebnis der Transformation wird herangezogen, um die Terme für den Positionsfehler in der Kovarianzmatrix zu initialisieren. Die Terme für die Varianz der Geschwindigkeit in x- und y-Richtung werden mit konstanten Werten initialisiert und als vom Positionsfehler statistisch unabhängig angesehen. Außerdem wird angenommen, dass der Raumpunkt sich zunächst nicht bewegt (v_{X} = v_{Y} =0).

Die Veränderung des Zustandsvektors wird dann als eine gleichförmige Bewegung der Position x, y des Raumpunktes mit der Geschwindigkeit v_{X}, v_{Y} modelliert.

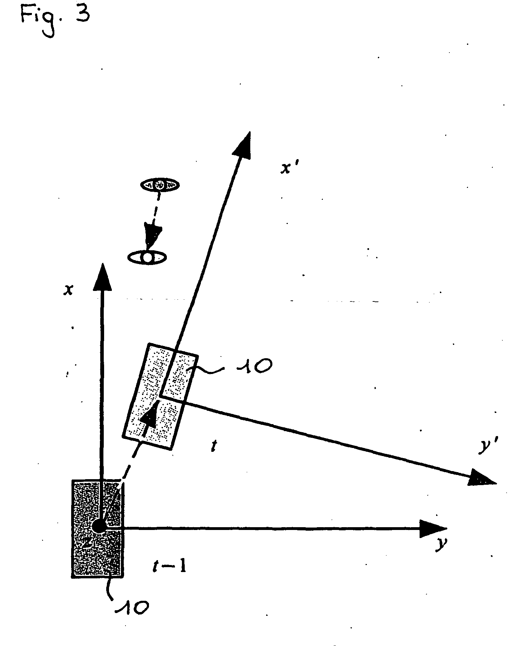

Die Translation und die Rotation des Fahrzeugs werden mit Hilfe eines Gierraten-Sensors und eines Geschwindigkeitssensors gemessen und fließen in die Systemgleichung zur Vorhersage des Zustandsvektors ein, wie in Fig. 3 veranschaulicht ist.

Der Zustandsvektor x, y, v_{X}, v_{Y} wird aus dem Koordinatensystem x, y in ein Koordinatensystem x', y' transformiert, welches sich mit dem Kraftfahrzeug und damit mit der Kameraeinrichtung bewegt. Der Ursprung dieses Koordinatensystems x', y' liegt dabei in der Fahrbahnebene auf Höhe der Kameraeinrichtung 20, und eine Achse x' des Koordinatensystems x', y' weist in Fahrtrichtung. Die Systemgleichung setzt sich somit aus der gleichförmigen Bewegung des zu verfolgenden Raumpunktes x, y und der in Fig. 3 veranschaulichten Koordinatentransformation in ein fahrzeugfestes Koordinatensystem x', y' zusammen, wobei letztere die zwischen einem Zeitpunkt t-1 und einem Zeitpunkt t erfolgte Drehung und Translation des Fahrzeuges 10 berücksichtigt.

Mittels einer ersten Kovarianzmatrix wird ein zu erwartender Fehler für die Vorhersage des Zustandsvektors x, vₓ, y, v_{y} berechnet. Die entsprechende Kovarianzmatrix setzt sich aus einem ersten, von der Systemgleichung des Zustandsschätzers abhängigen Term und einer ein additives weißes Beschleunigungsrauschen modellierenden Rauschmatrix zusammen.

Die Vorhersage für den Zustandsvektor x, y, v_{X}, v_{Y} wird über die nichtlinearen Projektionsgleichungen in Bildkoordinaten u, v umgerechnet.

Aus der Kovarianzmatrix des Zustandsvektors wird eine zweite Kovarianzmatrix berechnet, die einem zu erwartenden Fehler in Bildkoordinaten entspricht. Hierfür wird zunächst die Kovarianzmatrix des Zustandsvektors mit Hilfe einer Unscented Transformation in den Bildraum transformiert. Zu diesem variablen Anteil wird eine konstante Rausch-Kovarianzmatrix addiert.

Anschließend wird die Vorhersage für den Bildpunkt mit dem in einem zeitlich nachfolgenden Bild extrahierten Bildpunkt verglichen und aktualisiert.

Der aktualisierte Wert des Zustandsvektors und die dem zu erwartenden Fehler in Bildkoordinaten entsprechende Kovarianzmatrix bilden nun die Grundlage für einen erneuten Durchlauf zur Schätzung des nächsten Systemzustands.

## Patentansprüche

1. Verfahren zum Erkennen und Verfolgen eines Fußgängers (30) von einem Kraftfahrzeug (10) aus, an dem eine Kameraeinrichtung (20) angeordnet ist, wobei
mittels der Kameraeinrichtung (20) in regelmäßigen Zeitabständen ein Bildpunkte umfassendes Bild der Umgebung im Sichtbereich der Kameraeinrichtung (20) aufgenommen wird,
mit Hilfe eines Bildverarbeitungssystems diejenigen Bildpunkte identifiziert werden, welche zu verfolgenden Fußgängern (30) entsprechen, und für jeden dieser Fußgänger (30) ein Bildpunkt extrahiert wird, welcher eine Projektion in Bildkoordinaten desjenigen Raumpunktes darstellt, an dem der Fußgänger (30) eine Fahrbahnebene berührt,
die Bewegung des entsprechenden Raumpunktes in der Fahrbahnebene mittels eines Zustandsschätzers verfolgt wird, der einen vierdimensionalen Zustandsvektor verwendet, dessen Komponenten eine Position des Raumpunktes in der Fahrbahnebene und eine dazugehörige Geschwindigkeit in der Fahrbahnebene sind,
wobei die Verfolgung der Bewegung durch den Zustandsschätzer die Schritte umfasst, dass
eine Vorhersage für den Zustandsvektor generiert wird, diese Vorhersage über geeignete Projektionsgleichungen in Bildkoordinaten umgerechnet wird,
mittels einer Kovarianzmatrix ein zu erwartender Fehler für diese Vorhersage in Bildkoordinaten berechnet wird,
und diese Vorhersage mit dem in einem zeitlich nachfolgenden Bild extrahierten Bildpunkt verglichen und aktualisiert wird,
wobei der Zustandsschätzer eine lineare Systemgleichung verwendet, welche die Veränderung des Zustandsvektors modelliert als eine gleichförmige Bewegung der Position des Raumpunktes in der Fahrbahnebene mit der dazugehörigen Geschwindigkeit in der Fahrbahnebene,
wobei ein als Zustandsschätzer verwendetes Unscented Kalman-Filter initialisiert wird, indem ein Initialfehler in der Bildebene geschätzt und mit Hilfe der Unscented Transformation auf die Fahrbahnebene transformiert wird und das Ergebnis der Transformation herangezogen wird, um Terme für einen Positionsfehler in der Kovarianzmatrix zu initialisieren, während Terme für die Varianz der Geschwindigkeit in x- und y-Richtung mit konstanten Werten initialisiert und als vom Positionsfehler statistisch unabhängig angesehen werden.

2. Verfahren nach Anspruch 1,
**dadurch gekennzeichnet, dass** die Projektionsgleichungen einer unter Verwendung eines Lochkameramodells berechneten Projektion der Fahrbahnebene in die Bildebene entsprechen.

3. Verfahren nach einem der vorhergehenden Ansprüche,
**dadurch gekennzeichnet, dass** die Systemgleichung sich zusammensetzt aus einem Term für die gleichförmige Bewegung des zu verfolgenden Raumpunktes in der Fahrbahnebene mit der dazugehörigen Geschwindigkeit in der Fahrbahnebene sowie einem Term, der eine Translation und eine Rotation des Fahrzeuges (10) berücksichtigt.

4. Verfahren nach Anspruch 3,
**dadurch gekennzeichnet, dass** die Translation und die Rotation des Fahrzeuges (10) aus Sensordaten, insbesondere aus den Daten eines Geschwindigkeitssensors und eines Gierratensensors, ermittelt werden.

5. Verfahren nach Anspruch 3 oder 4,
**dadurch gekennzeichnet, dass** die Translation und die Rotation des Fahrzeuges (10) über eine Koordinatentransformation in ein fahrzeugfestes Koordinatensystem berücksichtigt werden.

6. Verfahren nach einem der vorstehenden Ansprüche,
**dadurch gekennzeichnet, dass** für den extrahierten Bildpunkt ein Richtungsstrahl (25) bestimmt wird, der diejenigen Raumpunkte in dem Sichtbereich umfasst, die bei einer Projektion auf das Bild auf den jeweiligen Bildpunkt projiziert würden, und unter Verwendung von Kameraparametern der Kameraeinrichtung derjenige Raumpunkt auf dem Sichtstrahl (25) bestimmt wird, an dem der Fußgänger (30) die Fahrbahnebene berührt.

7. Verfahren nach einem der vorstehenden Ansprüche,
**dadurch gekennzeichnet, dass** eine Kovarianzmatrix des Zustandsvektors sich aus einem von der Systemgleichung und einer in einem vorangegangenen Schritt berechneten Kovarianzmatrix abhängigen Term und einer Rauschmatrix zusammensetzt, wobei die Rauschmatrix ein additives weißes Beschleunigungsrauschen modelliert.

8. Verfahren nach Anspruch 7,
**dadurch gekennzeichnet, dass** die Kovarianzmatrix, welche dem zu erwartendem Fehler in Bildkoordinaten entspricht, sich aus einer konstanten Rausch-Kovarianzmatrix und einer variablen Kovarianzmatrix zusammensetzt, wobei diese variable Kovarianzmatrix durch eine Unscented Transformation aus der Kovarianzmatrix des Zustandsvektors berechnet wird.

9. Computerprogramm mit Programmcodemitteln zur Durchführung des Verfahrens nach einem der Ansprüche 1 bis 8, wenn das Computerprogramm auf einem Computer oder einer entsprechenden Recheneinheit ausgeführt wird.

10. Computerprogrammprodukt mit Programmcodemitteln, die auf einem computerlesbaren Datenträger gespeichert sind, zur Durchführung des Verfahrens nach einem der Ansprüche 1 bis 8, wenn das Computerprogramm auf einem Computer oder einer entsprechenden Recheneinheit ausgeführt wird.

11. Vorrichtung zum Erkennen und Verfolgen eines Fußgängers (30) von einem Kraftfahrzeug (10) aus, mit einer an dem Kraftfahrzeug (10) angeordneten Kameraeinrichtung (20) zur Aufnahme eines Bildes und einer Datenverarbeitungseinrichtung, die zur Durchführung des Verfahrens nach einem der Ansprüche 1 bis 8 ausgebildet ist.

## Claims

1. Method for detecting and tracking a pedestrian (30) from a motor vehicle (10) having a camera device (20) attached, wherein
a picture of the surroundings in view of the camera device (20) is taken at regular intervals with the camera device (20), the picture having image points,
using an image processing system, the image points corresponding to pedestrians (30) to be tracked are identified and for each of these pedestrians (30) an image point is extracted representing a projection in image coordinates of that spatial point at which the pedestrian (30) touches a road plane,
the movement of the corresponding spatial point in the road plane is tracked by using a state estimator which uses a four-dimensional state vector whose components are a position of the spatial point in the road plane and an associated velocity in the road plane,
wherein the tracking of the movement by the state estimator includes the steps that
a prediction for the state vector is generated,
the prediction is converted into image coordinates by suitable projection equations,
an expected error for that prediction in image coordinates is calculated using a covariance matrix,
and that prediction is compared with the image point extracted in a subsequent image and updated,
wherein the state estimator uses a linear system equation, which models the change of the state vector as a uniform movement of the position of the spatial point in the road plane with the associated velocity in the road plane,
wherein an Unscented Kalman filter used as state estimator is initialized in that an initial error is estimated in the image plane and transformed to the road plane using the Unscented Transformation, and the result of the transformation is used to initialize terms for a position error in the covariance matrix, while terms for the variance of the velocity in the x and y directions are initialized with constant values and are seen as statistically independent from the position error.

2. The method according to claim 1,
**characterized in that** the projection equations correspond to a projection of the road plane in the image plane computed using a pinhole camera model.

3. The method according to any of the preceding claims,
**characterized in that** the system equation consists of a term for the uniform movement of the spatial point to be tracked in the road plane with the associated velocity in the road plane and a term regarding a translation and a rotation of the vehicle (10).

4. The method according to claim 3,
**characterized in that** the translation and the rotation of the vehicle (10) are determined from sensor data, in particular from the data of a velocity sensor and a yaw rate sensor.

5. The method according to claim 3 or 4,
**characterized in that** the translation and the rotation of the vehicle (10) are provided for via a coordinate transformation into a vehicle-fixed coordinate system.

6. The method according to any of the preceding claims,
**characterized in that** a directional beam (25) is determined for the extracted image point including those spatial points in the view area which would be projected by a projection onto the image on a respective image point, and that spatial point on the directional beam (25) is determined, using camera parameters of the camera device, at which the pedestrian (30) touches the road plane.

7. The method according to any of the preceding claims,
**characterized in that** a covariance matrix of the state vector is composed of a term dependant of the system equation and a covariance matrix calculated in a previous step, and a noise matrix, wherein the noise matrix models an additive white acceleration noise.

8. The method according to claim 7,
**characterized in that** the covariance matrix, which corresponds to the expected error in image coordinates, is composed of a constant noise covariance matrix and a variable covariance matrix, wherein said variable covariance matrix is computed from the covariance matrix of the state vector using an Unscented Transformation.

9. Computer program with program code means for performing the method according to any of the claims 1 to 8, when the computer program is executed on a computer or a corresponding processing unit.

10. Computer program product with program code means, stored on a computer readable data means, for performing the method according to any of the claims 1 to 8, when the computer program is executed on a computer or a corresponding processing unit.

11. Device for detecting and tracking a pedestrian (30) from a motor vehicle (10), having a camera device (20) attached at the motor vehicle (10), for taking a picture, and a data processing device adapted for performing the method according to any of the claims 1 to 8.

## Revendications

1. Procédé pour reconnaître et suivre un piéton (30) depuis un véhicule automobile (10) sur lequel est agencé un système à caméra (20),
dans lequel
au moyen du système à caméra (20) on effectue à intervalles temporels réguliers une prise d'une image, comprenant des points d'images, de l'environnement dans la zone de vision du système à caméra (20),
à l'aide d'un système de traitement d'images, on identifie ceux des points d'images qui correspondent à des piétons (30) à suivre et, pour chacun de ces piétons (30) on extrait un point d'image qui représente une projection dans les coordonnées de l'image de celui des points d'espace au niveau duquel le piéton (30) est en contact avec un plan d'une chaussée de circulation,
le mouvement du point d'espace correspondant dans le plan de la chaussée de circulation est suivi au moyen d'une unité d'estimation d'état, laquelle utilise un vecteur d'état à quatre dimensions, dont les composantes sont une position du point d'espace dans le plan de la chaussée de circulation et une vitesse associée dans le plan de la chaussée de circulation,
dans lequel le suivi du mouvement par l'unité estimation d'état comprend les étapes suivant lesquelles
on génère une prédiction pour le vecteur d'état,
cette prédiction est transformée par calcul, au moyen d'équations de projection appropriées, en coordonnées d'images,
on calcule au moyen d'une matrice de covariance une erreur à prévoir pour cette prédiction en termes de coordonnées d'images,
et cette prédiction est comparée avec un point d'image extrait dans une image successive dans le temps et est actualisée,
l'unité d'estimation d'état utilise une équation de système linéaire qui représente un modèle de la variation du vecteur d'état sous forme d'un mouvement régulier de la position du point dans l'espace dans le plan de la chaussée de circulation avec la vitesse associée dans le plan de la chaussée de circulation,
dans lequel on initialise un filtre de Kalman "Unscented", utilisé à titre d'unité d'estimation d'état, en estimant une erreur initiale dans le plan d'image et en la transformant sur le plan de la chaussée de circulation à l'aide de la transformation Unscented, et le résultat de la transformation est utilisé pour initialiser des termes pour une erreur de position dans la matrice de covariance, tandis que des termes pour la variance de la vitesse en direction x et en direction y sont initialisés avec des valeurs constantes et sont considérés de manière statistiquement indépendante de l'erreur de position.

2. Procédé selon la revendication 1,
**caractérisé en ce que** les équations de projection correspondent à une projection, calculée en utilisant un modèle de caméra à trou, du plan de la chaussée de circulation dans le plan image.

3. Procédé selon l'une des revendications précédentes,
**caractérisé en ce que** l'équation du système se compose d'un terme pour le mouvement régulier du point d'espace à suivre dans le plan de la chaussée de circulation avec la vitesse associée dans le plan de la chaussée de circulation, et d'un terme qui tient compte d'une translation et d'une rotation du véhicule automobile (10).

4. Procédé selon la revendication 3,
**caractérisé en ce que** la translation et la rotation du véhicule (10) sont déterminées à partir de données de capteurs, en particulier à partir de des données d'un capteur de vitesse et d'un capteur de taux de lacet.

5. Procédé selon la revendication 3 ou 4,
**caractérisé en ce que** la translation et la rotation du véhicule (10) sont pris en compte via une transformation de coordonnées dans un système de coordonnées solidaire du véhicule.

6. Procédé selon l'une des revendications précédentes,
**caractérisé en ce que** pour le point d'image extrait, on détermine un rayon de direction (25), qui inclut ceux des points d'espace dans la zone de vision qui, lors d'une projection sur l'image, seraient projetés sur le point d'image respectif, et en utilisant des paramètres propres à la caméra du système à caméra, on détermine celui des points d'espace sur le rayon de vision (25) au niveau duquel le piéton (30) touche le plan de la chaussée de circulation.

7. Procédé selon l'une des revendications précédentes,
**caractérisé en ce qu'**une matrice de covariance du vecteur d'état se compose d'un terme qui dépend de l'équation du système et d'une matrice de covariance calculée dans une étape précédente, et d'une matrice de bruit, la matrice de bruit constituant un modèle d'un bruit d'accélération blanc additif.

8. Procédé selon la revendication 7,
**caractérisé en ce que** la matrice de covariance, qui correspond à l'erreur à prévoir dans les coordonnées d'images, se compose d'une matrice de covariance de bruit constante et d'une matrice de covariance variable, ladite matrice de covariance variable étant calculée par une transformation Unscented à partir de la matrice de covariance du vecteur d'état.

9. Programme d'ordinateur avec des moyens formant code de programme pour mettre en oeuvre le procédé selon l'une des revendications 1 à 8 quand le programme d'ordinateur est exécuté sur un ordinateur ou sur une unité de calcul correspondante.

10. Produit de programme d'ordinateur avec des moyens formant code de programme qui sont mémorisés sur un support de données lisible à l'ordinateur, pour mettre en oeuvre le procédé selon l'une des revendications 1 à 8 quand le programme d'ordinateur est exécuté sur un ordinateur ou sur une unité de calcul correspondante.

11. Appareil pour reconnaître et suivre un piéton (30) depuis un véhicule automobile (10), comprenant un système à caméra (20) agencé sur le véhicule automobile (10), pour prendre une image, et un système de traitement de données qui est réalisé pour mettre en oeuvre le procédé selon l'une des revendications 1 à 8.
